# EUROPÄISCHE PATENTSCHRIFT

(11) **EP 2 711 574 B1**
(45) Veröffentlichungstag und Bekanntmachung des Hinweises auf die Patenterteilung: **05.04.2017**
(21) Anmeldenummer: 12184958.2
(22) Anmeldetag: 19.09.2012
(51) Int. Cl.: F16C 43/04, F16C 19/06, F16C 33/60, F16C 33/64

(54) **Kugellager und Verfahren zur Herstellung eines Kugellagers**
Ball bearing and method for manufacturing a ball bearing
Roulement à billes et procédé de fabrication d'un roulement à billes

(43) Veröffentlichungstag der Anmeldung: 26.03.2014
(73) Patentinhaber: NP Germany GmbH, 59929 Berlin (DE)
(72) Erfinder: Baukloh, Horst, 58540 Meinerzhagen (DE)
(74) Vertreter: Patentanwälte Dörner & Kötter PartG mbB

(56) Entgegenhaltungen:
- WO-A1-2010/072269
- DE-A1- 2 529 913
- DE-A1- 19 918 889
- DE-A1-102006 025 307
- DE-A1-102008 007 168
- DE-U- 1 980 171
- DE-U1- 8 020 620

## Beschreibung

Die Erfindung betrifft ein Kugellager nach dem Oberbegriff des Patentanspruchs 1. Die Erfindung betrifft weiterhin ein Verfahren zur Herstellung eines Kugellagers nach dem Patentanspruch 4.

Kugellager sind in unterschiedlichen Ausführungen bekannt. Sie bestehen im Wesentlichen aus einem Innenring sowie einem koaxial zu diesem angeordneten Außenring, die zueinander gegenüberliegend jeweils eine Führung in Form einer Laufrille aufweisen. Zwischen den Laufrillen sind Kugeln als Wälzkörper eingebracht, die regelmäßig durch einen Käfig in gleichem Abstand gehalten werden. Kugellager werden insbesondere auch aus Kunststoff hergestellt, wobei Wälzkörper aus Glas oder Keramik zum Einsatz kommen, welche unter anderem beständig gegen aggressive Säuren oder Laugen in der Chemie- und Lebensmittelindustrie sind. Die Montage solcher Kugellager erweist sich nach wie vor als sehr aufwendig. Dabei gestaltet sich insbesondere das Einbringen des mit Kugeln bestücktem Kugelkäfigs zwischen Innenring und Außenring problematisch, da die Kugeln möglichst Spielfrei zwischen den Laufrillen von Innen- und Außenring angeordnet sein sollen.

Die DE 2529913 A1 offenbart die Merkmale des Oberbegriffs des Anspruchs 1.

Hier will die Erfindung Abhilfe schaffen. Der Erfindung liegt die Aufgabe zu Grunde ein Kugellager bereitzustellen, das eine einfache und vollautomatisierte Montage ermöglicht. Gemäß der Erfindung wird diese Aufgabe durch die Merkmale des kennzeichnenden Teils des Patentanspruchs 1 gelöst.

Mit der Erfindung ist ein Kugellager geschaffen, dass eine einfache und automatisierte Montage ermöglicht. Durch die Ausbildung des Außenrings durch zwei Außenteilringe ist das Einbringen der Kugeln vereinfacht. Die beiden Außenteilringe sind durch eine radial umlaufende Umspritzung miteinander verbunden.

Erfindungsgemäß weist wenigstens ein Außenteilring an seiner dem gegenüberliegenden Außenteilring abgewandten Außenseite einen außendurchmesserverminderten Absatz auf, in den die Umspritzung eingreift. Hierdurch ist eine gute Fixierung der beiden Außenteilringe erzielt.

Nach der Erfindung sind in wenigstens einem Außenteilring an seiner dem gegenüberliegenden Außenteilring abgewandten Außenseite wenigstens zwei Kerben eingebracht, in die an der Umspritzung radial nach innen kragend angeordnete Laschen eingreifen. Hierdurch ist eine zuverlässige axiale Fixierung der beiden Außenteilringe bewirkt. Bevorzugt sind in beiden Außenteilringen solche Kerben eingebracht, in die an der Umspritzung radial nach innen kragend angeordnete Laschen eingreifen. Bevorzugt sind drei jeweils um 120° zueinander versetzt angeordnete Kerben angeordnet, in die an der Umspritzung radial nach innen kragend angeordnete Laschen eingreifen.

In Weiterbildung der Erfindung sind die beiden Außenteilringe identisch ausgebildet. Hierdurch ist die Herstellung der Außenteilringe vereinfacht. Zudem ist die Lagehaltung minimiert.

Der Erfindung liegt weiterhin die Aufgabe zu Grunde, ein Verfahren zur Herstellung eines Kugellagers bereitzustellen, bei dem die Montage vereinfacht und automatisiert durchführbar ist. Gemäß der Erfindung wird diese Aufgabe durch die Merkmale des Patentanspruchs 4 gelöst.

Mit der Erfindung ist ein Verfahren zur Herstellung eines Kugellagers geschaffen, dass einfach und automatisiert montierbar ist. Dadurch, dass zunächst ein erster eine halbe Laufrille aufweisender Außenteilring und nachfolgend ein mit einem Kugelkäfig versehener Innenring in die Umspritzungskavität des Werkzeugs eingelegt wird, gestaltet sich die Positionierung des Kugelkäfigs, der lediglich auf den Innenring aufgeschoben werden muss, als unproblematisch. Anschließend wird ein zweiter eine halbe Laufrille aufweisender Außenteilring an den ersten Außenteilring eingelegt, wodurch ein eine gemeinsame Laufrille aufweisender Außenring gebildet ist, an dem der Kugelkäfig anliegt. Anschließend werden die beiden Außenteilringe in der Umspritzungskavität radial umlaufend umspritzt, wonach das fertige Kugellager aus dem Werkzeug ausgebracht werden kann.

Erfindungsgemäß weist wenigstens ein Außenteilring an seiner dem gegenüberliegenden Außenteilring abgewandten Außenseite einen außendurchmesserverminderten Absatz auf, der bei dem Umspritzvorgang aufgefüllt wird. Hierdurch ist eine gute Fixierung der beiden Außenteilringe bewirkt.

Nach der Erfindung sind in wenigstens einem Außenteilring, bevorzugt an beiden Außenteilringen an ihrer dem jeweils gegenüberliegenden Außenteilring abgewandten Außenseite wenigstens zwei, bevorzugt drei jeweils um 120° zueinander versetzt angeordnete Kerben eingebracht, die bei dem Umspritzvorgang aufgefüllt werden. Hierdurch ist eine gute axiale Fixierung der beiden Außenteilringe bewirkt. Die beiden Außenteilringe sind so zu einem Außenring mit innen liegender Laufrille verbunden.

Bevorzugt werden zwei identisch ausgebildete Außenringe eingesetzt. Hierdurch ist die Lagerhaltung minimiert.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

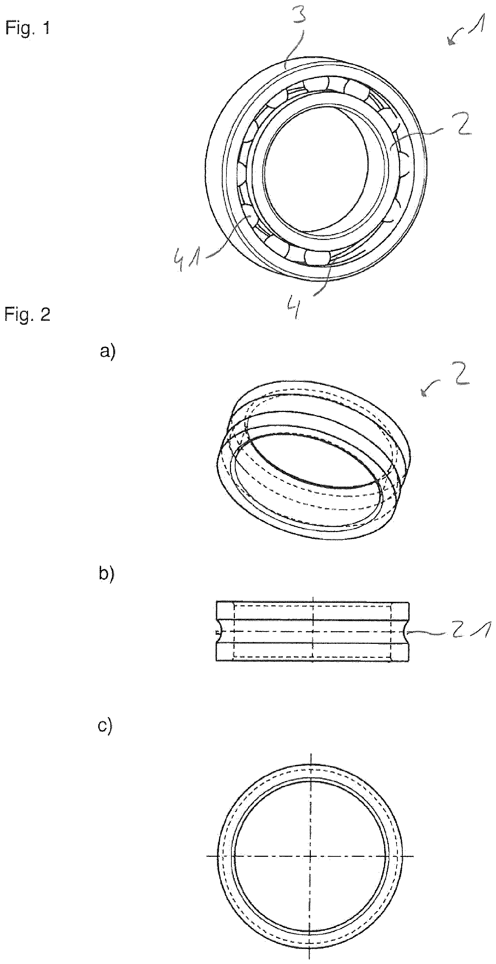

- Figur 1: die schematische Darstellung eines Kugellagers;
- Figur 2: den Innenring des Kugellagers aus Figur 1
a) in räumlicher Darstellung;
b) in Draufsicht;
c) in Seitenansicht;

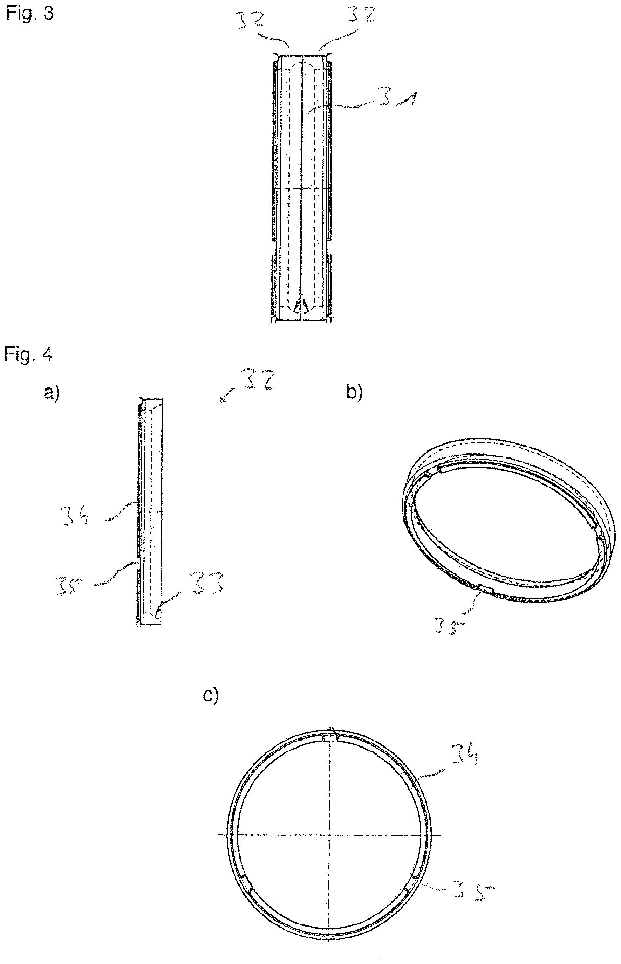

- Figur 3: die schematische Darstellung des aus zwei Außenteilringen gebildeten Außenrings des Kugellagers aus Figur 1 ohne Umspritzung;
- Fig. 4: die Darstellung eines Außenteilrings des Außenrings aus Figur 3
a) in Draufsicht;
b) in räumlicher Darstellung;
c) in Seitenansicht;
- Fig. 5: die schematische Darstellung der Umspritzung des Außenrings des Kugellagers aus Figur 1
a) in räumlicher Darstellung
b) in Seitenansicht
c) in Draufsicht
- Fig. 6: die schematische Darstellung eines Verfahrens zur Herstellung eines Verfahrens zur Herstellung eines Kugellagers.

Das als Ausführungsbeispiel gewählte Kugellager 1 ist gebildet aus einem eine Laufrille 21 aufweisenden Innenring 2 sowie einem koaxial zu diesem angeordneten, eine Laufrille 31 aufweisenden Außenring 3. Zwischen der Laufrille 21 des Innenrings 2 und der Laufrille 31 des Außenrings 3 ist ein mit Kugeln 41 bestückter Kugelkäfig 4 angeordnet. Die Kugeln 41 liegen dabei an den Laufrillen 21, 31 von Innenring 2 bzw. Außenring 3 an.

Der Außenring 3 ist gebildet aus zwei identischen Außenteilringen 32, an deren zueinander zugewandten Innenseiten ein Radius 33 eingeformt ist, der eine halbe Laufrille 31 ausbildet. Die beiden Außenteilringe 32 weisen an ihrer dem jeweils gegenüberliegenden Außenteilring 32 abgewandten Außenseite einen außendurchmesserverminderten Absatz 34 auf, der mit jeweils um 120° zueinander versetzt angeordneten Kerben 35 versehen ist.

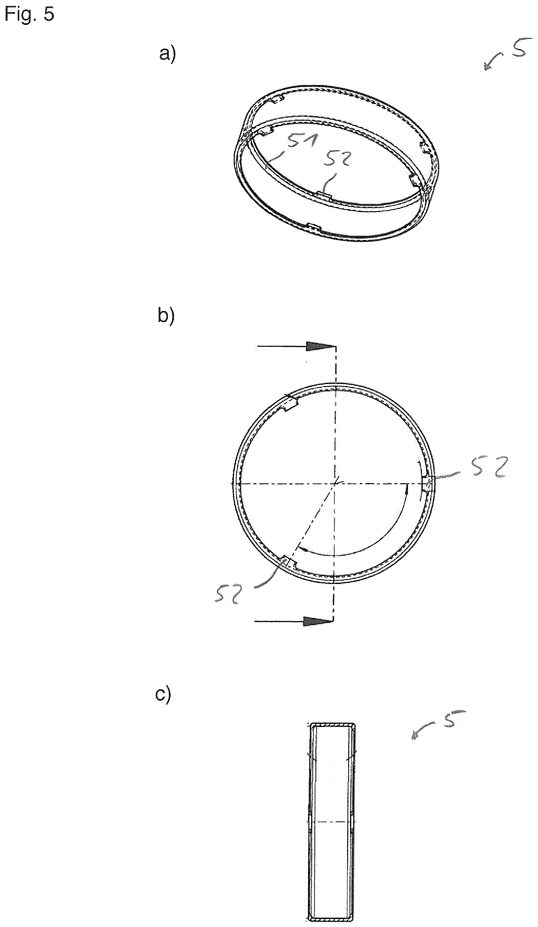

Die beiden Außenteilringe 32 sind über eine Umspritzung 5 miteinander verbunden. Die Umspritzung 5 ist - wie Figur 5 zu entnehmen - in Form eines Hohlzylinders ausgebildet, der an beiden Seiten mit einem nach innen kragenden umlaufenden Rand 51 versehen ist. Weiterhin sind an der Umspritzung 5 drei jeweils um 120° zueinander versetzt radial nach innen kragend angeordnete Laschen angeformt. Die Innenwand der Umspritzung 5 liegt außen an den Außenteilringen 32 an, wobei der an beiden Seiten der Umspritzung 5 angeordnete umlaufende Rand 51 an dem durchmesserreduzierten Absatz 34 der Außenteilringe 32 anliegt. Die Laschen 52 der Umspritzung 5 greifen dabei in die Kerben 35 der Außenteilringe 32 ein. Durch die Umspritzung 5 sind die beiden Außenteilringe 32 so zu einem Außenring 3 verbunden.

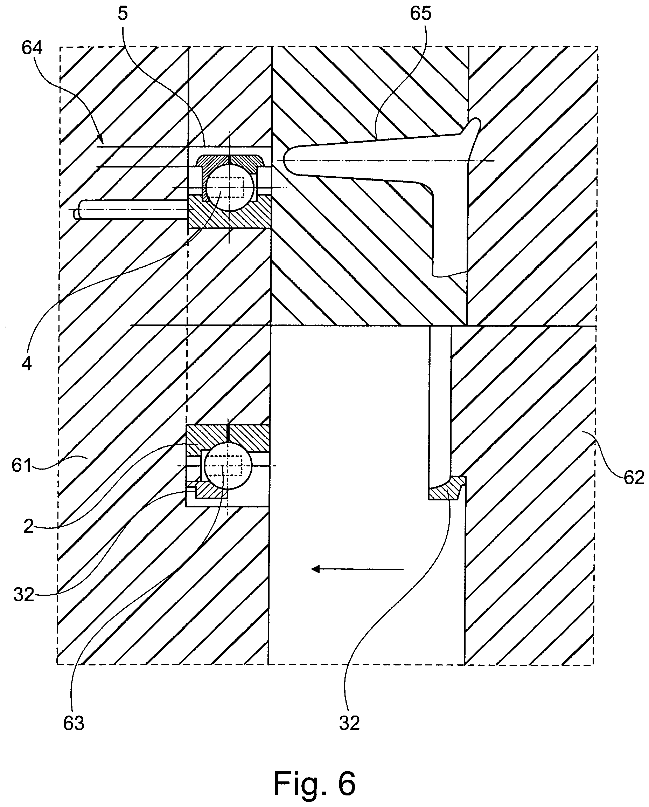

Die Herstellung des zuvor beschriebenen Kugellagers wird nachfolgend anhand der Prinzipskizze gemäß Figur 6 erläutert. Zunächst wird ein Außenteilring 32 in die Umspritzkavität 63 der auswerferseitigen ersten Werkzeughälfte 61 eines Spritzgießwerkzeugs 6 eingesetzt. Nachfolgend wird der Innenring 2, auf den ein mit Kugeln 41 versehener Kugelkäfig 4 aufgeschoben wurde, in die auswerferseitige erste Werkzeughälfte 61 eingelegt. Der Kugelkäfig 4 umfasst im Ausführungsbeispiel zwölf Keramikkugeln. Anschließend wird ein zweiter Außenteilring 32 in die düsenseitige, zweite Werkzeughälfte 62 des Spritzgießwerkzeugs 6 eingelegt. In der unteren Hälfte der Darstellung in Figur 6 ist das Spritzgießwerkzeug 6 in geöffneter Position gezeigt. Nach Schließen des Spritzgießwerkzeugs 6 liegen die beiden Außenteilringe 32 aneinander an. Über die Düse 65 des Spritzgießwerkzeugs 6 werden nun die beiden aneinander liegenden Außenteilringe 32 umspritzt, wobei der Durchmesser verminderte Absatz 34 sowie die Kerben 35 der Außenteilringe 32 verfüllt werden. Die obere Hälfte der Figur 6 zeigt das Spritzgießwerkzeug 6 in geschlossener Position beim Umspritzvorgang. Im Ausführungsbeispiel sind drei Anspritzpumpe zum Umspritzen der Außenteilringe 32 angeordnet. Nachfolgend wird das Spritzgießwerkzeug 6 geöffnet und das fertige Kugellager 1 wird über den Auswerfer 64 entformt.

## Patentansprüche

1. Kugellager (1), umfassend einen Innenring (2) und einen koaxial zu diesem angeordneten Außenring (3), die zueinander gegenüberliegend jeweils eine Laufrille (21, 31) aufweisen, wobei zwischen den Laufrillen (21, 31) von diesen eingefasst Kugeln (41) eingebracht sind, wobei der Außenring (3) durch zwei Außenteilringe (32) gebildet ist, die durch eine radial umlaufende Umspritzung (5) miteinander verbunden sind, **dadurch gekennzeichnet, dass** wenigstens ein Außenteilring (32) an seiner dem gegenüberliegenden Außenteilring (32) abgewandten Außenseite einen außendurchmesserverminderten Absatz (34) aufweist, in den die Umspritzung (5) eingreift, wobei in wenigstens einem Außenteilring (32) an seiner dem gegenüberliegenden Außenteilring (32) abgewandten Außenseite wenigstens zwei Kerben (35) eingebracht sind, in die an der Umspritzung (5) radial nach innen kragend angeordnete Laschen (52) eingreifen.

2. Kugellager nach Anspruch 1, **dadurch gekennzeichnet, dass** drei jeweils um 120° zueinander versetzt angeordnete Kerben (35) angeordnet sind, in die an der Umspritzung (5) radial nach innen kragend angeordnete Laschen (52) eingreifen.

3. Kugellager nach einem der vorgenannten Ansprüche, **dadurch gekennzeichnet, dass** die beiden Außenteilringe (32) identisch ausgebildet sind.

4. Verfahren zur Herstellung eines Kugellagers (1) nach einem der vorgenannten Ansprüche, wobei zunächst in ein Spritzgießwerkzeug (6), das eine Umspritzungskavität (63) für ein komplettes Kugellager (1) aufweist, ein erster eine halbe Laufrille aufweisender Außenteilring (32) und nachfolgend ein mit einem mit Kugeln (41) bestückten Kugelkäfig (4) versehener Innenring (2) eingelegt wird, anschließend ein zweiter eine halbe Laufrille aufweisender Außenteilring (32) derart an den ersten Außenteilring (32) eingelegt wird, dass eine gemeinsame Laufrille (31) gebildet ist, an welcher die Kugeln (41) des Kugelkäfigs (4) anliegen und nachfolgend die beiden Außenteilringe (32) radial umlaufend umspritzt werden, wobei wenigstens ein Außenteilring (32) an seiner dem gegenüberliegenden Außenteilring (32) abgewandten Außenseite einen außendurchmesserverminderten Absatz (34) aufweist, der bei dem Umspritzvorgang aufgefüllt wird, wobei in wenigstens einem Außenteilring (32) an seiner dem gegenüberliegenden Außenteilring (32) abgewandten Außenseite wenigstens zwei Kerben (35) eingebracht sind, die bei dem Umspritzvorgang aufgefüllt werden.

5. Verfahren nach Anspruch 4, **dadurch gekennzeichnet, dass** zwei identisch ausgebildete Außenteilringe (32) eingesetzt werden.

## Claims

1. Ball bearing (1) comprising an inner race (2) and an outer race (3) arranged coaxially thereto, each of which has a running groove (21, 31) arranged opposite one another, where balls (41) are located and held in place between the running grooves (21, 31), where the outer race (3) is formed by two outer half-races (32) joined to one another by radial injection moulding (5), **characterised in that** at least one outer half-race (32) has a shoulder (34) which reduces its outer diameter on its outer side facing away from the opposite outer half-race (32), into which shoulder (34) the radial injection moulding (5) engages, where at least two notches (35) are made in the outer side of at least one outer half-race (32) facing away from the opposite half-race (32), into which notches (35) radially inward-projecting lugs (52) on the moulding (5) engage.

2. Ball bearing in accordance with claim 1 **characterised in that** three notches (35) are arranged offset at 120° from one another, into which the radially inward-projecting lugs (52) on the injection moulding (5) engage.

3. Ball bearing in accordance with any of the preceding claims, **characterised in that** the two outer half-races (32) are identical in form.

4. Process for manufacturing a ball bearing (1) in accordance with any of the preceding claims, where first of all, a first outer half-race (32) with half a running groove is placed in an injection-moulding tool (6) with a moulding cavity (63) for a complete ball bearing (1) and an inner race (2) with a ball cage (4) fitted with balls (41) is then placed in the tool, subsequently a second outer half-race (32) with half a running groove is placed against the first outer half-race (32) in such a way that a single common running groove (31) is formed against which the balls (41) of the ball cage (4) lie, and material is then injected radially around the two outer half-races (32), where at least one outer half-race (32) has a shoulder (34) which reduces its outer diameter on its outer side facing away from the opposite outer half-race (32), which shoulder (34) is filled during the injection-moulding process, where at least two notches (35) are made on the outside of at least one outer half-race (32) facing away from the opposite outer half-race (32), which are filled during the injection-moulding process.

5. Process in accordance with claim 4, **characterised in that** two identically formed outer half-races (32) are used.

## Revendications

1. Roulement à billes (1) comprenant au moins une bague intérieure (2) et une bague extérieure (3) agencée coaxialement à la première, qui présentent chacune une gorge de roulement, gorges de roulement (21, 31) qui se font respectivement face, sachant qu'ont été introduites entre les gorges de roulement (21, 31) des billes (41) que ces gorges enchâssent, sachant que la bague extérieure (3) est formée par deux bagues extérieures partielles (32) reliées entre elles par le matériau injecté (5) sur la périphérie radiale, **caractérisé en ce qu'**au moins une bague extérieure partielle (32) présente sur son côté extérieur ne regardant pas la bague extérieure partielle (32) située en face, un talon (34) d'un diamètre extérieur amenuisé dans lequel engrène le matériau injecté sur la périphérie (5), sachant que dans au moins une bague extérieure partielle (32), sur son côté extérieur ne regardant pas la bague extérieure partielle (32) située en face, ont été ménagées au moins deux entailles (35) dans lesquelles engrènent des pattes (52) disposées contre le matériau injecté sur la périphérie (5) et agencées en porte-à-faux radial vers l'intérieur.

2. Roulement à billes selon la revendication 1, **caractérisé en ce que** sont disposées, mutuellement espacées de 120°, trois entailles (35) dans lesquelles engrènent des pattes (52) disposées radialement en porte-à-faux vers l'intérieur contre le matériau injecté sur la périphérie (5).

3. Roulement à billes selon l'une des revendications précédentes, **caractérisé en ce que** les deux bagues extérieures partielles (32) sont configurées identiques.

4. Procédé de fabrication d'un roulement à billes (1) selon l'une des revendications précédentes, sachant que dans un premier temps, dans un outil de moulage par injection (6) présentant une cavité d'injection périphérique (63) pour un roulement à billes (1) complet, l'on introduit une première bague extérieure partielle (32) présentant une demi-gorge de roulement, et qu'ensuite l'on introduit une bague intérieure (2) munie d'une cage (4) garnie de billes (41), qu'ensuite l'on introduit contre la première bague extérieure partielle (32) une seconde bague extérieure partielle (32) présentant une demi-gorge, de sorte qu'est formée une gorge de roulement (31) conjointe contre laquelle les billes (41) de la cage (4) appliquent, et qu'ensuite du matériau est injecté sur la périphérie radiale des deux bagues extérieures partielles (32), sachant qu'au moins une bague extérieure partielle (32) présente, sur son côté extérieur ne regardant pas la bague extérieure partielle (32) située en face, un talon (34) d'un diamètre extérieur amenuisé comblé pendant l'opération d'injection périphérique, sachant qu'au moins dans une bague extérieure partielle (32), sur son côté extérieur ne regardant pas la bague extérieure partielle (32) située en face, ont été ménagées deux entailles (35) qui sont comblées pendant l'opération d'injection périphérique.

5. Procédé selon la revendication 4, **caractérisé en ce que** deux bagues extérieures partielles (32) de configuration identique sont utilisées.
